# EUROPEAN PATENT SPECIFICATION

(11) **EP 4 354 559 B1**
(45) Date of publication and mention of the grant of the patent: **11.02.2026**
(21) Application number: 22864851.5
(22) Date of filing: 08.07.2022
(51) Int. Cl.: H01M 8/04119, B01D 63/02, B01D 39/16

(54) **FUEL CELL MEMBRANE HUMIDIFIER**
BEFEUCHTER FÜR BRENNSTOFFZELLENMEMBRAN
HUMIDIFICATEUR À MEMBRANE DE PILE À COMBUSTIBLE

(30) Priority: 31.08.2021 KR 20210115976; 07.07.2022 KR 20220084025
(43) Date of publication of application: 17.04.2024
(73) Proprietor: Kolon Industries, Inc., Seoul 07793 (KR)
(72) Inventor: KIM, Do Woo, Seoul 07793 (KR); AHN, Na Hyun, Seoul 07793 (KR); KIM, In Ho, Seoul 07793 (KR)
(74) Representative: Vossius & Partner Patentanwälte Rechtsanwälte mbB
(86) International application number: PCT/KR2022/009963
(87) International publication number: WO 2023/033342

(56) References cited:
- JP-A- 2001 201 122
- JP-A- 2002 298 895
- JP-A- 2007 083 860
- JP-A- 2007 083 860
- JP-A- 2008 014 592
- JP-A- 2010 146 809
- KR-A- 20100 022 837
- KR-A- 20190 081 736
- KR-A- 20200 122 260
- KR-A- 20210 011 204
- US-A1- 2009 130 495

## Description

### Technical Field

The present disclosure relates to a fuel cell membrane humidifier, and more particularly, to a fuel cell membrane humidifier for which convenience of assembly may be improved because the fuel cell membrane humidifier may be directly mounted on a structure of a transportation means such as a vehicle, a ship, or an airplane or a generator system of a building without additional equipment and manufacturing convenience may be improved because mounting requirements of various clients may be met.

### Background Art

Fuel cells refer to power-generating cells for producing electricity by combining hydrogen with oxygen. Unlike general chemical cells such as dry batteries or storage batteries, fuel cells may continuously produce electricity as long as hydrogen and oxygen are supplied, and have efficiency that is about twice that of internal combustion engines because there is no heat loss.

Also, because chemical energy generated by the combination of hydrogen and oxygen is directly converted into electrical energy, the emission of pollutants is low. Accordingly, fuel cells are not only environmentally friendly, but also may reduce concerns about resource depletion due to increased energy consumption.

Such fuel cells may be roughly classified, according to the type of electrolyte used, into a polymer electrolyte membrane fuel cell (PEMFC), a phosphoric acid fuel cell (PAFC), a molten carbonate fuel cell (MCFC), a solid oxide fuel cell (SOFC), and an alkaline fuel cell (AFC).

These fuel cells fundamentally operate according to the same principle, but are different in terms of the type of fuel used, operating temperature, catalyst, and electrolyte. Among them, the PEMFC is known to be the most promising not only for small-scale stationary power generation equipment but also for transportation systems because the PEMFC operates at a lower temperature than other fuel cells and may be miniaturized due to its high power density.

One of the most important factors in improving the performance of the PEMFC is to maintain a moisture content by supplying at least a certain amount of moisture to a polymer electrolyte membrane or a proton exchange membrane (PEM) of a membrane electrode assembly (MEA). This is because power generation efficiency is rapidly reduced when the polymer electrolyte membrane dries.

Examples of a method of humidifying a polymer electrolyte membrane include 1) a bubbler humidification method of filling a pressure-resistant container with water and supplying moisture by allowing a target gas to pass through a diffuser, 2) a direct injection method of calculating the amount of moisture to be supplied that is required for fuel cell reaction and directly supplying moisture to a gas flow pipe through a solenoid valve, and 3) a humidification membrane method of supplying moisture to a gas fluidized bed by using a polymer separator.

Among the methods, the humidification membrane method of humidifying a polymer electrolyte membrane by providing vapor to air supplied to the polymer electrolyte membrane by using a membrane through which only vapor included in off-gas is selectively transmitted is advantageous in that the weight and size of a membrane humidifier may be reduced.

When a module is formed, a hollow fiber membrane having a large transmission area per unit volume is suitable for the selective transmission membrane used in the humification membrane method. That is, when a membrane humidifier is manufactured by using a hollow fiber membrane, high integration of the hollow fiber membrane having a large contact surface area is possible, and thus, a fuel cell may be sufficiently humidified even with a small amount, an inexpensive material may be used, and moisture and heat included in off-gas discharged from the full cell at a high temperature may be collected and reused through the membrane humidifier.

JP 2010 146809 A and JP 2007 083860 A disclose humidifiers.

### Disclosure

### Technical Problem

An objective of the present disclosure is to provide a fuel cell membrane humidifier in which convenience of assembly may be improved because the fuel cell membrane humidifier may be directly mounted on a structure of a transportation means such as a vehicle, a ship, or an airplane or a generator system of a building without additional equipment and manufacturing convenience may be improved because mounting requirements of various clients may be met.

### Technical Solution

A fuel cell membrane humidifier as defined in attached claim 1.

In the fuel cell membrane humidifier according to an embodiment of the present disclosure, the fastening means may be a bolt on which a thread is formed, and a thread corresponding to the thread of the bolt may be formed on the first fastener, the second fastener, and the third fastener.

In the fuel cell membrane humidifier according to an embodiment of the present disclosure, the sliding portion may include a guide groove formed at a position corresponding to the rib.

In the fuel cell membrane humidifier according to an embodiment of the present disclosure, the mid-case may include a partition wall dividing an inner space of the mid-case into a first space and a second space, and a constant bypass hole passing through the partition wall to connect the first space to the second space.

In the fuel cell membrane humidifier according to an embodiment of the present disclosure, each of the at least one cartridge may include an inner case including a first mesh hole unit into which the second fluid is introduced and a second mesh hole unit through which the second fluid introduced through the first mesh hole unit is subjected to moisture exposure and then discharged to outside, wherein the first mesh hole unit and the second mesh hole unit are asymmetrical to each other.

In the fuel cell membrane humidifier according to an embodiment of the present disclosure, a total area of mesh hole windows of the first mesh hole unit may be greater than a total area of mesh hole windows of the second mesh hole unit.

In the fuel cell membrane humidifier according to an embodiment of the present disclosure, when sizes of the mesh hole windows of the first mesh hole unit and the second mesh hole unit are same, a number of mesh holes constituting the first mesh hole unit may be greater than a number of mesh holes constituting the second mesh hole unit.

In the fuel cell membrane humidifier according to an embodiment of the present disclosure, when numbers of the mesh hole windows of the first mesh hole unit and the second mesh hole unit are same, an area of each of mesh holes constituting the first mesh hole unit may be greater than an area of each of mesh holes constituting the second mesh hole unit.

Other details of the embodiments according to various aspects of the present disclosure are included in the following detailed description.

### Advantageous Effects

According to an embodiment of the present disclosure, convenience of assembly may be improved because a fuel cell membrane humidifier may be directly mounted on a structure of a transportation means such as a vehicle, a ship, or an airplane or a generator system of a building without additional equipment, and manufacturing convenience may be improved because mounting requirements of various clients may be met.

### Description of Drawings

FIG. 1 is a front view illustrating a fuel cell membrane humidifier, according to an embodiment of the present disclosure.
FIG. 2 is a plan view illustrating a fuel cell membrane humidifier, according to an embodiment of the present disclosure.
FIG. 3 is a view illustrating a position-variable mount.
FIGS. 4 and 5 are plan views illustrating an example where a position of a position-variable mount is changed on a humidification module.
FIG. 6 is a side view illustrating a humidification module from which a cap of a fuel cell membrane humidifier is removed, according to an embodiment of the present disclosure.
FIG. 7 is a cross-sectional view taken along line A-A' of FIG. 2.
FIG. 8 is a perspective view illustrating a cartridge mounted on a fuel cell membrane humidifier, according to an embodiment of the present disclosure.
FIG. 9 is a cross-sectional view illustrating a cartridge mounted on a fuel cell membrane humidifier, according to an embodiment of the present disclosure.
FIG. 10 is a view for comparing a flow distance of a second fluid in a conventional cartridge (upper drawing) and a cartridge (lower drawing) according to an embodiment of the present disclosure.

### Mode for Invention

As the present disclosure allows for various changes and numerous embodiments, certain embodiments will be illustrated and described in the detailed description. However, this is not intended to limit the present disclosure to particular modes of practice, and it is to be appreciated that the invention is defined by the attached claims.

The terms used in the present application are merely used to describe specific embodiments, and are not intended to limit the present disclosure. The singular forms "a," "an," and "the" are intended to include the plural forms as well, unless the context clearly indicates otherwise. Further, as used in this application, the terms "include," "have" and their conjugates may be construed to denote a certain feature, number, step, operation, constituent element, component, or a combination thereof, but may not be construed to exclude the existence or addition of one or more other features, numbers, steps, operations, constituent elements, components, or combinations thereof. Hereinafter, a fuel cell membrane humidifier according to an embodiment of the present disclosure will be described with reference to the drawings.

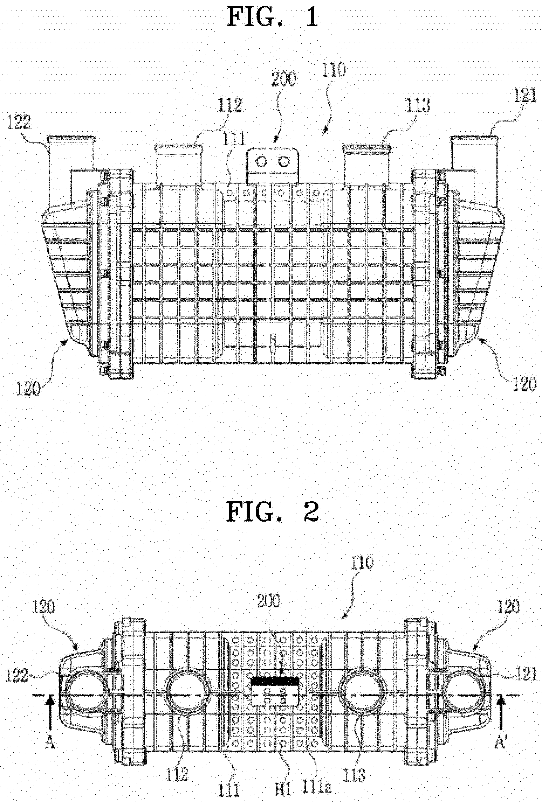

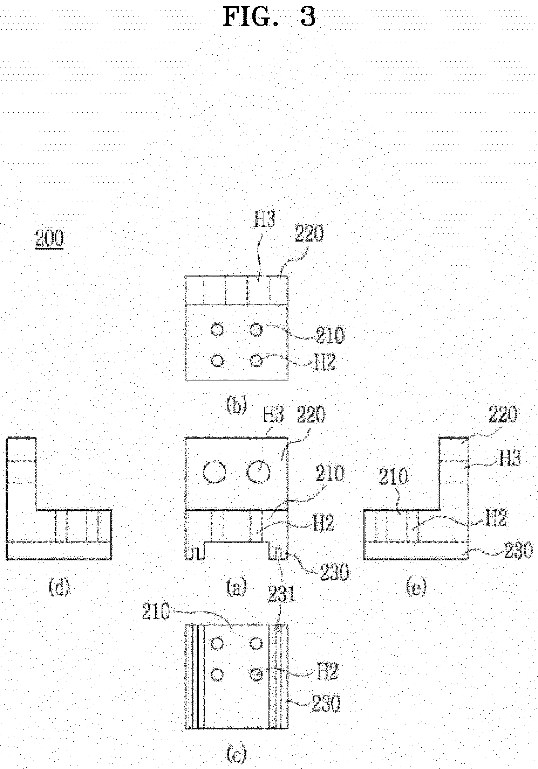

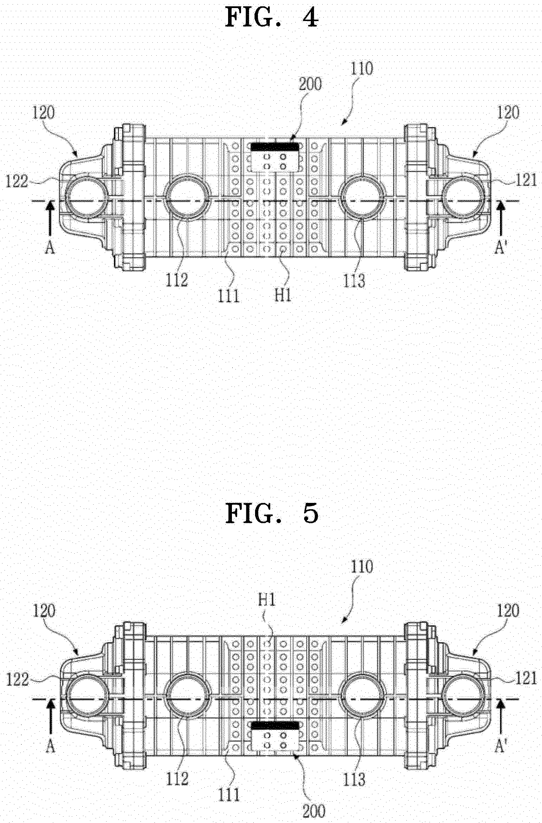

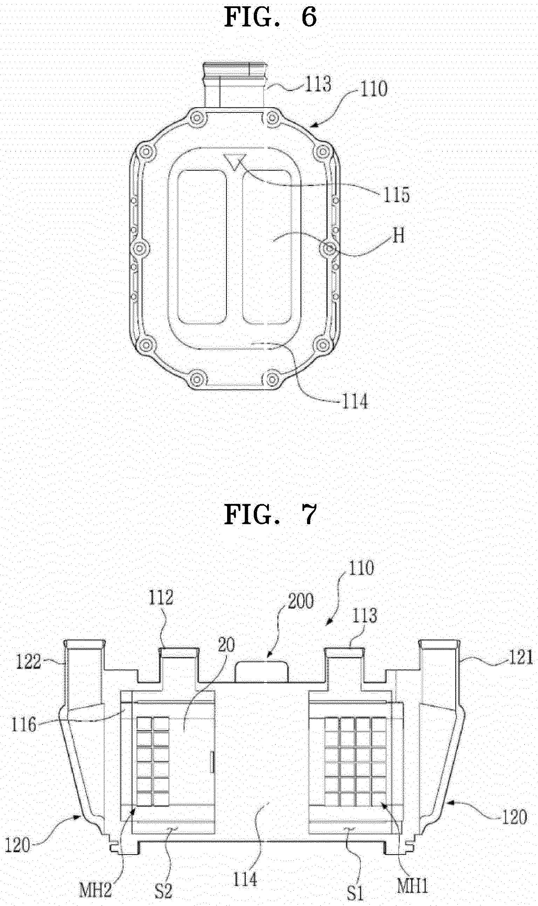

FIG. 1 is a front view illustrating a fuel cell membrane humidifier, according to an embodiment of the present disclosure. FIG. 2 is a plan view illustrating a fuel cell membrane humidifier, according to an embodiment of the present disclosure. FIG. 3 is a view illustrating a position-variable mount. FIGS. 4 and 5 are plan views illustrating an example where a position of a position-variable mount is changed on a humidification module. FIG. 6 is a side view illustrating a humidification module from which a cap of a fuel cell membrane humidifier is removed, according to an embodiment of the present disclosure. FIG. 7 is a cross-sectional view taken along line A-A' of FIG. 2.

As shown in FIGS. 1 to 7, a fuel cell membrane humidifier according to an embodiment of the present disclosure includes a humidification module 110, caps 120, and a position-variable mount 200.

The humidification module 110 performs moisture exchange between a first fluid supplied from the outside and a second fluid discharged from a fuel cell stack (not shown). The caps 120 are fastened to both ends of the humidification module 110. A first fluid inlet 121 through which the first fluid supplied from the outside is supplied to the humidification module 110 is formed in one of the caps 120, and a first fluid outlet 122 through which the first fluid humidified by the humidification module 110 is supplied to the fuel cell stack is formed in the other of the caps 120.

The humidification module 110 includes a mid-case 111 including a second fluid inlet 112 and a second fluid outlet 113, and at least one cartridge 20 located in the mid-case 111. The second fluid discharged from the fuel cell stack (not shown) is introduced into the second fluid inlet 112 and subjected to moisture exchange in the humidification module 110, and then is discharged to the second fluid outlet 113. A first fastener H1 is formed on a surface of the mid-case 111. The first fastener H1 may be coupled to a second fastener H2 described below by using a fastening means.

In the present disclosure, a fluid introduced/discharged through the second fluid inlet 112 or the second fluid outlet 113 is not limited to the second fluid. Also, a fluid introduced/discharged through the first fluid inlet 121 or the first outlet 122 is not limited to the first fluid.

One of the caps 120 may be designed to supply the second fluid to the humidification module 110 to flow through a hollow fiber membrane, and the other of the caps 120 may be designed to discharge the second fluid subjected to moisture exchange to the outside. Also, in this case, the first fluid may be introduced through any one of the second fluid inlet 112 and the second fluid outlet 113, and the first fluid humidified by the humidification module 110 may be supplied to the fuel cell stack through the other of the second fluid inlet 112 and the second fluid outlet 113. A flow direction of the first fluid and a flow direction of the second fluid may be the same or opposite to each other.

Each of the mid-case 111 and the cap 120 may be independently formed of hard plastic or metal, and may have a circular or polygonal cross-sectional shape in a width direction. The circular shape includes an elliptical shape, and the polygonal shape includes a polygonal shape with rounded corners. Examples of the hard plastic may include polycarbonate, polyamide (PA), polyphthalamide (PPA), and polypropylene (PP). An inner space of the mid-case 111 may be divided by a partition wall 114 into a first space S1 and a second space S2. The partition wall 114 may have an insertion hole H into which at least one cartridge 20 may be inserted.

A gasket 116 may be provided between the mid-case 111 and the cartridge 20. The gasket 116 allows the cartridge 20 to be mounted on the humidification module 110 through mechanical assembly. Accordingly, when abnormality occurs in a specific portion of the humidification module 110 (e.g., the cartridge 20), the mid-case 111 and the gasket 116 may be simply mechanically separated from the humidification module 110 and then only the corresponding portion may be repaired or replaced.

In an embodiment of the present disclosure, the position-variable mount 200 for mounting the fuel cell membrane humidifier including the humidification module 110 on a mount target structure is included. The mount target structure may refer to a portion of a transportation means such as a vehicle, a ship, or an airplane or a portion of a generator system of a building on which a fuel cell system including the fuel cell stack and the fuel cell membrane humidifier is mounted. The following will be described assuming that the fuel cell membrane humidifier is mounted on a structure of a vehicle.

Referring to FIGS. 1 and 2, the position-variable mount 200 may be mounted on a top surface of the humidification module 110. However, the present disclosure is not limited thereto, and the position-variable mount 200 may be mounted on a side surface or a bottom surface of the humidification module 110, or may be mounted on a surface of the cap 120 according to a design.

After the position-variable mount 200 is located at a desired position on a surface of the humidification module 110 by an operator according to a shape of the structure of the vehicle that is a mount target, the position-variable mount 200 may be fixed to the humidification module 110 through a fastening means. The position-variable mount 200 will be described with reference to FIG. 3.

(a), (b), (c), (d), and (e) of FIG. 3 are respectively a front view, a plan view, a bottom view, a left side view, and a right side view of the position-variable mount 200.

Referring to FIG. 3, the position-variable mount 200 includes a body portion 210, a head portion 220, and a sliding portion 230.

The body portion 210 may have a certain shape, for example, a quadrangular shape, and at least one second fastener H2 is formed on the body portion 210. The second fastener H2 may be fastened to the first fastener H1 by a fastening means so that the position-variable mount 200 is fixed to the surface of the humidification module 110. For example, the fastening means may be a bolt on which a thread is formed, and a thread corresponding to the thread of the bolt may be formed on each of inner surfaces of the first fastener H1 and the second fastener H2.

The head portion 220 is connected to the body portion 210. For example, as shown in FIG. 3, the head portion 220 may extend from an end of a top surface of the body portion 210. At least one third fastener H3 is formed on the head portion 220. The third fastener H3 allows the position-variable mount 200 to be mounted on the structure of the vehicle by using a fastening means.

The sliding portion 230 is formed on a bottom surface of the body portion 210. The sliding portion 230 is slidably inserted into a rib 111a protruding from a surface of the mid-case 111. The sliding portion 230 may include a guide groove 231 formed at a position corresponding to the rib 111a. The sliding portion 230 may move toward the rib 111a without being separated from the rib 111a, due to the guide groove 231.

In an embodiment of the present disclosure, because the position-variable mount 200 may be integrally formed with the fuel cell membrane humidifier, the need for separate additional equipment (e.g., a separate mount and a bracket for the separate mount) may be reduced.

Also, because the position-variable mount 200 may slide along the rib formed on the surface of the humidification module 110 or the surface of the cap 120 according to a design as shown in FIGS. 4 and 5, a design of a new humidification module for reflecting mounting requirements of clients (e.g., a mounting position and an assembly structure) may be reduced. Accordingly, because mounting requirements of various clients may be met, manufacturing convenience may be improved.

Referring to FIGS. 6 and 7, the fuel cell membrane humidifier according to an embodiment of the present disclosure may include a constant bypass hole 115 formed in the partition wall 114.

The constant bypass hole 115 is formed in a certain shape to pass through the partition wall 114. The constant bypass hole 115 connects the first space S1 and the second space S2 divided by the partition wall 114.

A part of the second fluid introduced into the second fluid inlet 112 flows from the first space S1 to the second space S2 through the constant bypass hole 115 and is discharged to the second fluid outlet 113. Because the second fluid flowing through the bypass hole 115 does not contact the first fluid, moisture exchange is not performed.

When the volume of the fuel cell membrane humidifier is reduced, differential pressure in the fuel cell membrane humidifier increases due to the second fluid introduced from the fuel cell stack. Because the increased differential pressure adversely affects the efficiency of the fuel cell membrane humidifier, it is necessary to relieve the differential pressure. Because the bypass hole 115 allows a part of the introduced second fluid to bypass hollow fiber membranes and be discharged to the outside, the increased differential pressure may be relieved. Accordingly, the bypass hole 115 is advantageous in reducing the volume of the fuel cell membrane humidifier.

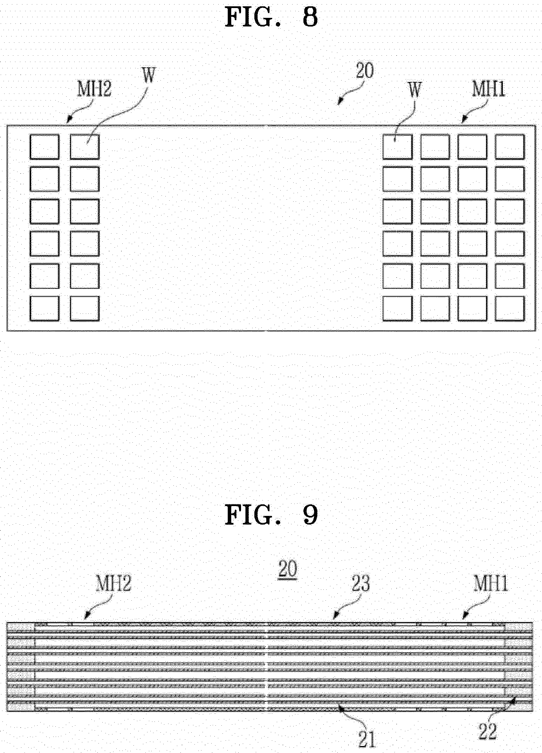

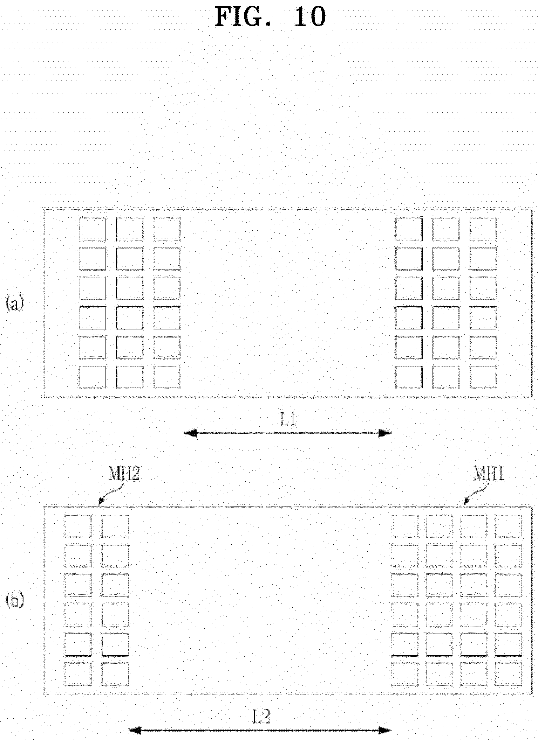

Next, a cartridge mounted on a fuel cell membrane humidifier according to an embodiment of the present disclosure will be described with reference to FIGS. 8 to 10. FIG. 8 is a perspective view illustrating a cartridge mounted on a fuel cell membrane humidifier, according to an embodiment of the present disclosure. FIG. 9 is a cross-sectional view illustrating a cartridge mounted on a fuel cell membrane humidifier, according to an embodiment of the present disclosure. FIG. 10 is a view for comparing a flow distance of a second fluid in a conventional cartridge (upper drawing) and a cartridge (lower drawing) according to an embodiment of the present disclosure.

In an embodiment of the present disclosure, the cartridge 20 may improve humidification efficiency by adjusting the number or area of mesh hole windows W constituting a mesh hole unit.

Referring to FIG. 9, the cartridge 20 includes a plurality of hollow fiber membranes 21, a potting unit 22, and an inner case 23.

The hollow fiber membranes 21 may include a polymer film formed of polysulfone resin, polyethersulfone resin, sulfonated polysulfone resin, polyvinylidene fluoride (PVDF) resin, polyacrylonitrile (PAN) resin, polyimide resin, polyamideimide resin, polyesterimide resin, or a mixture of at least two of the above materials.

The potting unit 22 fixes ends of the hollow fiber membranes 21. The potting unit 22 may be formed by curing a liquid resin such as liquid polyurethane resin through a casting method such as deep potting or centrifugal potting.

The inner case 23 has an opening at each end, and the plurality of hollow fiber membranes 21 are accommodated in the inner case 23. The potting unit 22 in which ends of the hollow fiber membranes 21 are potted closes the opening of the inner case 23. The inner case 23 includes a first mesh hole unit MH1 arranged in a mesh shape for fluid communication with the first space S1 and a second mesh hole unit MH2 arranged in a mesh shape for fluid communication with the second space S2.

The second fluid introduced into the first space S1 of the mid-case 111 through the second fluid inlet 112 flows into the inner case 23 through the first mesh hole unit MH1 and contacts outer surfaces of the hollow fiber membranes 21. Next, the second fluid subjected to moisture exchange with the first fluid escapes to the second space S2 through the second mesh hole unit MH2, and then is discharged from the mid-case 111 through the second fluid outlet 113.

In the cartridge 20, a total area of the mesh hole windows W of the first mesh hole unit MH1 may be greater than a total area of the mesh hole windows W of the second mesh hole unit MH2. The mesh hole window W is an opening through which the second fluid is introduced and discharged.

The introduction of the second fluid into the inner case 23 may be facilitated by increasing a total area of the mesh hole windows W of the first mesh hole unit MH1 formed near the second fluid inlet 112, and the flow of the second fluid in the inner case 23 may be promoted by reducing a total area of the mesh hole windows W of the second mesh hole unit MH2 formed near the second fluid outlet 113.

Also, when the first mesh hole unit MH1 and the second mesh hole unit MH2 are formed to be asymmetrical to each other, a distance between the first mesh hole unit MH1 and the second mesh hole unit MH2 may increase and thus a flow distance of the second fluid in the inner case 23 may increase, compared to a case where the first mesh hole unit MH1 and the second mesh hole unit MH2 are symmetrical to each other. As the flow distance of the second fluid increases (see L1 and L2 of FIG. 10), a time for which the second fluid contacts surfaces of the hollow fiber membranes 220 may increase, thereby improving overall humidification efficiency.

When sizes of the mesh hole windows W of both mesh hole units are the same, the number of mesh holes constituting the first mesh hole unit MH1 may be greater than the number of mesh holes constituting the second mesh hole unit MH2.

Also, when the numbers of the mesh hole windows W of both mesh hole units are the same, the area of each of mesh holes constituting the first mesh hole unit MH1 may be greater than the area of each of mesh holes constituting the second mesh hole unit MH2.

As such, in an embodiment of the present disclosure, because the first mesh hole unit MH1 and the second mesh hole unit MH2 are asymmetrically formed, the flow of the second fluid in the inner case 23 may be promoted and a flow distance of the second fluid may increase, thereby improving humidification efficiency.

Although the one or more embodiments of the present disclosure have been described, it will be understood by one of ordinary skill in the art that the present disclosure may be modified and changed in various ways by adding, changing, or removing constituent components without departing from the scope of the present disclosure described in the claims, and the modifications or changes fall within the scope of the present disclosure.

### [Description of Reference Numerals]

| | | | |
|---|---|---|---|
| 110 : | humidification module | 111 : | mid-case |
| 112 ; | second fluid inlet | 113 : | second fluid outlet |
| 114 : | partition wall | 115 : | constant bypass hole |
| 120 : | cap | | |
| 200 : | position-variable mount | 210 : | body portion |
| 220 : | head portion | 230 : | sliding portion |
| 20 : | cartridge | 21 : | hollow fiber membrane |
| 22 : | potting unit | 23 : | inner case |
| MH1 : | first mesh hole unit | MH2 : | second mesh hole unit |

## Claims

1. A fuel cell membrane humidifier comprising:
a humidification module (110) configured to perform moisture exchange between a first fluid and a second fluid, and comprising a mid-case (111), a second fluid inlet (112) through which the second fluid is introduced into the mid-case (111), a second fluid outlet (113) through which the second fluid is discharged to outside, and at least one cartridge located in the mid-case (111);
caps (120) formed on both ends of the humidification module (110); and
a position-variable mount (200) formed to be position-variable on the humidification module (110) and configured to mount the humidification module (110) on a mount target structure,
wherein the position-variable mount (200) comprises
a body portion (210) comprising a first fastener (H1) formed on a surface of the mid-case (111) and at least one second fastener (H2) fastened to the first fastener (H1) by a fastening means,
a head portion (220) connected to the body portion (210) and comprising a third fastener (H3) for mounting on the mount target structure by using a fastening means, and
a sliding portion (230) formed on a bottom surface of the body portion (210) and slidably inserted into a rib (111a) formed on the surface of the mid-case (111).

2. The fuel cell membrane humidifier of claim 1, wherein the fastening means is a bolt on which a thread is formed, and a thread corresponding to the thread of the bolt is formed on the first fastener (H1), the second fastener (H2), and the third fastener (H3).

3. The fuel cell membrane humidifier of claim 1, wherein the sliding portion (230) comprises a guide groove (231) formed at a position corresponding to the rib (111a).

4. The fuel cell membrane humidifier of claim 1, wherein the mid-case (111) comprises a partition wall (114) dividing an inner space of the mid-case (111) into a first space (S1) and a second space (S2), and a constant bypass hole (115) passing through the partition wall (114) to connect the first space (S1) to the second space (S2).

5. The fuel cell membrane humidifier of claim 1, wherein each of the at least one cartridge (20) comprises an inner case (23) comprising a first mesh hole unit (MH1) into which the second fluid is introduced and a second mesh hole unit (MH2) through which the second fluid introduced through the first mesh hole unit (MH1) is subjected to moisture exposure and then discharged to outside, wherein a total area of mesh hole windows (W) of the first mesh hole unit (MH1) is greater than a total area of mesh hole windows (W) of the second mesh hole unit (MH2).

6. The fuel cell membrane humidifier of claim 5, wherein, the sizes of the mesh hole windows (W) of the first mesh hole unit (MH1) and the second mesh hole unit (MH2) are same, the number of mesh holes constituting the first mesh hole unit (MH1) is greater than the number of mesh holes constituting the second mesh hole unit (MH2).

7. The fuel cell membrane humidifier of claim 5, wherein, the numbers of the mesh hole windows (W) of the first mesh hole unit (MH1) and the second mesh hole unit (MH2) are same, the area of each of mesh holes constituting the first mesh hole unit (MH1) is greater than the area of each of mesh holes constituting the second mesh hole unit (MH2).

8. The fuel cell membrane humidifier of claim 1, wherein the mount target structure is a structure of a transportation means or is a generator system of a building.

## Patentansprüche

1. Brennstoffzellenmembran-Befeuchter, aufweisend:
ein Befeuchtungsmodul (110), das zum Durchführen eines Feuchtigkeitsaustauschs zwischen einem ersten Fluid und einem zweiten Fluid konfiguriert ist und das ein Mittelgehäuse (111), einen zweiten Fluideinlass (112), durch den das zweite Fluid in das Mittelgehäuse (111) eingeleitet wird, einen zweiten Fluidauslass (113), durch den das zweite Fluid nach außen abgeleitet wird, und mindestens eine in dem Mittelgehäuse (111) angeordnete Kartusche aufweist;
Kappen (120), die an beiden Enden des Befeuchtungsmoduls (110) ausgebildet sind; und
eine positionsveränderliche Halterung (200), die positionsveränderlich an dem Befeuchtungsmodul (110) ausgebildet und zum Befestigen des Befeuchtungsmoduls (110) an einer Halterungszielstruktur konfiguriert ist,
wobei die positionsveränderliche Halterung (200) aufweist:
einen Körperabschnitt (210), der ein erstes Befestigungselement (H1), das auf einer Oberfläche des Mittelgehäuses (111) ausgebildet ist, und mindestens ein zweites Befestigungselement (H2), das durch ein Befestigungsmittel an dem ersten Befestigungselement (H1) befestigt ist, aufweist,
einen Kopfabschnitt (220), der mit dem Körperabschnitt (210) verbunden ist und ein drittes Befestigungselement (H3) zur Montage an der Halterungszielstruktur unter Verwendung eines Befestigungsmittels aufweist, und
einen Gleitabschnitt (230), der an einer Bodenfläche des Körperabschnitts (210) ausgebildet ist und gleitend in eine Rippe (111a) eingesetzt ist, die auf der Oberfläche des Mittelgehäuses (111) ausgebildet ist.

2. Brennstoffzellenmembran-Befeuchter nach Anspruch 1, wobei das Befestigungsmittel ein Bolzen ist, auf dem ein Gewinde ausgebildet ist, und ein dem Gewinde des Bolzens entsprechendes Gewinde auf dem ersten Befestigungselement (H1), dem zweiten Befestigungselement (H2) und dem dritten Befestigungselement (H3) ausgebildet ist.

3. Brennstoffzellenmembran-Befeuchter nach Anspruch 1, wobei der Gleitabschnitt (230) eine Führungsnut (231) aufweist, die an einer der Rippe (111a) entsprechenden Stelle ausgebildet ist.

4. Brennstoffzellenmembran-Befeuchter nach Anspruch 1, wobei das Mittelgehäuse (111) eine Trennwand (114), die einen Innenraum des Mittelgehäuses (111) in einen ersten Raum (S1) und einen zweiten Raum (S2) unterteilt, und eine durch die Trennwand (114) verlaufende konstante Bypassöffnung (115) aufweist, um den ersten Raum (S1) mit dem zweiten Raum (S2) zu verbinden.

5. Brennstoffzellenmembran-Befeuchter nach Anspruch 1, wobei jede der mindestens einen Kartusche (20) ein Innengehäuse (23) aufweist, das eine erste Maschenlocheinheit (MH1), in die das zweite Fluid eingeleitet wird, und eine zweite Maschenlocheinheit (MH2), durch die das durch die erste Maschenlocheinheit (MH1) eingeleitete zweite Fluid einer Feuchtigkeitseinwirkung ausgesetzt und dann nach außen abgeleitet wird, aufweist, wobei eine Gesamtfläche der Maschenlochfenster (W) der ersten Maschenlocheinheit (MH1) größer als eine Gesamtfläche der Maschenlochfenster (W) der zweiten Maschenlocheinheit (MH2) ist.

6. Brennstoffzellenmembran-Befeuchter nach Anspruch 5, wobei die Größen der Maschenlochfenster (W) der ersten Maschenlocheinheit (MH1) und der zweiten Maschenlocheinheit (MH2) gleich sind und die Anzahl der Maschenlöcher, die die erste Maschenlocheinheit (MH1) bilden, größer ist als die Anzahl der Maschenlöcher, die die zweite Maschenlocheinheit (MH2) bilden.

7. Brennstoffzellenmembran-Befeuchter nach Anspruch 5, wobei die Anzahl der Maschenlochfenster (W) der ersten Maschenlocheinheit (MH1) und der zweiten Maschenlocheinheit (MH2) gleich ist, die Fläche jedes der Maschenlöcher, die die erste Maschenlocheinheit (MH1) bilden, größer ist als die Fläche jedes der Maschenlöcher, die die zweite Maschenlocheinheit (MH2) bilden.

8. Brennstoffzellenmembran-Befeuchter nach Anspruch 1, wobei die Halterungszielstruktur eine Struktur eines Transportmittels oder ein Generatorsystem eines Gebäudes ist.

## Revendications

1. Humidificateur à membrane pour pile à combustible comprenant :
un module d'humidification (110) configuré pour réaliser un échange d'humidité entre un premier fluide et un deuxième fluide, et comprenant un carter intermédiaire (111), une deuxième entrée de fluide (112) à travers laquelle le deuxième fluide est introduit dans le carter intermédiaire (111), une deuxième sortie de fluide (113) à travers laquelle le deuxième fluide est déchargé à l'extérieur, et au moins une cartouche positionnée dans le carter intermédiaire (111) ;
des capuchons (120) formés sur les deux extrémités du module d'humidification (110) ; et
un support variable en position (200) formé pour être variable en position sur le module d'humidification (110) et configuré pour monter le module d'humidification (110) sur une structure cible de support,
dans lequel le support variable en position (200) comprend :
une partie de corps (210) comprenant une première fixation (H1) formée sur une surface du carter intermédiaire (111) et au moins une deuxième fixation (H2) fixée sur la première fixation (H1) par un moyen de fixation,
une partie de tête (220) raccordée à la partie de corps (210) et comprenant une troisième fixation (H3) destinée à être montée sur la structure cible de support en utilisant un moyen de fixation, et
une partie coulissante (230) formée sur une surface inférieure de la partie de corps (210) et insérée, de manière coulissante, dans une nervure (111a) formée sur la surface du carter intermédiaire (111).

2. Humidificateur à membrane pour pile à combustible selon la revendication 1, dans lequel le moyen de fixation est un boulon sur lequel un filetage est formé et un filetage correspondant au filetage du boulon est formé sur la première fixation (H1), la deuxième fixation (H2) et la troisième fixation (H3).

3. Humidificateur à membrane pour pile à combustible selon la revendication 1, dans lequel la partie coulissante (230) comprend une rainure de guidage (231) formée dans une position correspondant à la nervure (111a).

4. Humidificateur à membrane pour pile à combustible selon la revendication 1, dans lequel le carter intermédiaire (111) comprend une paroi de séparation (114) divisant un espace interne du carter intermédiaire (111) en un premier espace (S1) et en un deuxième espace (S2) et un trou de dérivation constant (115) passant à travers la paroi de séparation (114) pour raccorder le premier espace (S1) au deuxième espace (S2).

5. Humidificateur à membrane pour pile à combustible selon la revendication 1, dans lequel chacune de la au moins une cartouche (20) comprend un carter interne (23) comprenant une première unité de trou maillé (MH1) dans laquelle le deuxième fluide est introduit et une deuxième unité de trou maillé (MH2) à travers laquelle le deuxième fluide introduit à travers la première unité de trou maillé (MH1) est soumis à l'exposition à l'humidité et est ensuite déchargé à l'extérieur, dans lequel une surface totale des fenêtres de trou maillé (W) de la première unité de trou maillé (MH1) est supérieure à une surface totale de fenêtres de trou maillé (W) de la deuxième unité de trou maillé (MH2).

6. Humidificateur à membrane pour pile à combustible selon la revendication 5, dans lequel les tailles des fenêtres de trou maillé (W) de la première unité de trou maillé (MH1) et de la deuxième unité de trou maillé (MH2) sont identiques, le nombre de trous maillés constituant la première unité de trou maillé (MH1) est supérieur au nombre de trous maillés constituant la deuxième unité de trou maillé (MH2).

7. Humidificateur à membrane pour pile à combustible selon la revendication 5, dans lequel les nombres de fenêtres de trou maillé (W) de la première unité de trou maillé (MH1) et de la deuxième unité de trou maillé (MH2) sont identiques, la surface de chacun des trous maillés constituant la première unité de trou maillé (MH1) est supérieure à la surface de chacun des trous maillés constituant la deuxième unité de trou maillé (MH2).

8. Humidificateur à membrane pour pile à combustible selon la revendication 1, dans lequel la structure cible de support est une structure d'un moyen de transport ou est un système de générateur d'un bâtiment.
